Europäisches Patentamt

European Patent Office

Office européen des brevets

(19)

(11) Veröffentlichungsnummer : **0 103 691**
**B1**

(12) **EUROPÄISCHE PATENTSCHRIFT**

(45) Veröffentlichungstag der Patentschrift :
**16.04.86**

(21) Anmeldenummer : **83106815.0**

(22) Anmeldetag : **12.07.83**

(51) Int. Cl.⁴ : **B 60 C 15/02**, B 60 C 17/00

(54) **Fahrzeugrad.**

(30) Priorität : **20.08.82 DE 3231012**

(43) Veröffentlichungstag der Anmeldung :
**28.03.84 Patentblatt 84/13**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**DE-A- 2 425 068**
**DE-A- 2 544 474**
**DE-C-    94 571**
**FR-A- 2 472 978**
**FR-A- 2 482 904**
**US-A- 4 169 496**

(73) Patentinhaber : **Continental Gummi-Werke Aktiengesellschaft**
**Königsworther Platz 1**
**D-3000 Hannover 1 (DE)**

(72) Erfinder : **Seitz, Hans, Dr. Dipl.-Ing.**
**Grafenbergerstrasse 5b**
**D-3012 Langenhagen 1 (DE)**
Erfinder : **Pieper, Henner**
**Bahnhofstrasse 2B**
**D-3012 Langenhagen 1 (DE)**
Erfinder : **Frerichs, Udo**
**Buchenweg 7**
**D-3012 Langenhagen 8 (DE)**
Erfinder : **Rach, Heinz-Dieter**
**Planetenring 32**
**D-3008 Garbsen 1 (DE)**

Jouve, 18, rue St-Denis, 75001 Paris, France

**Beschreibung**

Die Erfindung betrifft ein luftbereiftes Fahrzeugrad mit einer starren einteiligen Felge und einem Gürtelreifen mit zugfesten Kernen in den Wülsten, bei dem die Felge sich im wesentlichen radial nach innen erstreckende Felgenhörner und neben diesen am inneren Umfang Sitzflächen für die Reifenwülste aufweist, bei dem weiterhin am inneren Umfang der Felge zur Mittelebene des Felgenkörpers hin Vertiefungen angeordnet sind, deren Grund sich auf einem gegenüber dem mittleren Sitzflächendurchmesser größeren Durchmesser befindet, und bei dem am äußeren Umfang des Felgenkörpers umlaufende Stützflächen für den Reifen vorhanden sind. Ein solches Fahrzeugrad ist aus der DE-A-3 000 428 bekannt.

Es besteht allgemein daß Problem, daß im Defektfall, d. h. bei einem Entweichen der Luft aus einem Reifen, ein noch so vorsichtiges Weiterfahren eine Beschädigung bzw. eine Zerstörung des Reifens hervorruft. Dies liegt vor allem daran, daß beim Abrollen des platten Reifens die Differenz zwischen dem Abrollumfang der Felge und dem Reifenumfang eine ungewöhnlich große Reibung erzeugt, die eine Wärmezerstörung des Reifens zur Folge haben kann. Wegen der Differenz dieser beiden Umfänge lösen die Reifenwülste sich zeitweise von den Sitzflächen, werden dann jedoch im Verlauf der weiteren Radumdrehung zurückgedrückt ; der Reifen beginnt zu « schlagen ».

Bei bekannten Fahrzeugrädern hilft man sich zur Lösung der geschilderten Probleme damit, in den Reifenhohlraum ein Kühl- bzw. Schmiermittel einzubringen. Doch ist diese Maßnahme sehr umständlich, und sie hat in der Praxis auch nicht die gewünschten Erfolge gebracht.

Der Erfindung liegt deshalb die Aufgabe zugrunde, ein für den Notfall verbessertes Fahrzeugrad der eingangs genannten Art anzugeben.

Diese Aufgabe wird erfindungsgemäß dadurch gelöst, daß entweder an der Felge und an den Reifenwülsten oder nur an den Reifenwülsten Mittel vorhanden sind, die bei einem Luftdruckverlust aufgrund eines Defektes zumindest im Bereich der Aufstandsfläche des Reifens ein Abspringen der Reifenwülste von den Felgensitzflächen in Richtung auf die Mittelebene des Felgenkörpers bewirken und die eine auch nur zeitweilige Rückkehr der Reifenwülste auf die Sitzflächen während der Fahrt verhindern, so daß die Felge bei einem Notlauf auf dem Reifen abrollt.

Der Erfindung liegt die Erkenntnis zugrunde, daß große Reibungsverluste verhindert werden können, wenn man zuverlässige Maßnahmen dafür vorsieht, daß die Wülste in einem Notfall sofort nach innen von den Felgensitzen springen und danach in dieser Lage verbleiben. Die Radfelge rollt dann gleichsam im Reifen ab, so daß die unterschiedlichen Umfänge nicht durch inneren Schlupf ausgeglichen werden müssen. Anders ausgedrückt : Während einer Umdrehung der Felge legt der Reifen weniger als eine vollständige Umdrehung zurück, ohne daß dies zu inneren Verspannungen führt.

Ein zuverlässiges Lösen der Reifenwülste von den Felgensitzflächen im Notfall wird dadurch erreicht, daß jeder Reifenwulst mittels einer angeformten Nase, die ein zusätzliches Federelement enthalten kann, im montierten Zustand ein Drehmoment erfährt, das an der Nase eine zur Vertiefung der Felge gerichtete Kraft erzeugt. Bei einem Luftverlust bewegen sich die Wülste des Reifens in Richtung dieser Vertiefungen, und sie werden durch angeformte Vorsprünge, die sich hinter Felgenvorsprüngen gleichsam verhaken, an einer Rückkehr in ihre ursprüngliche Lage gehindert.

Das beschriebene Drehmoment kann dadurch erzeugt werden, daß der Reifen in gespreizter Form mit axial nach außen gerichteten Nasen vulkanisiert wird und daß gegebenenfalls als zusätzliches Federelement eine mit Abstand zum Kern in der Nase angeordnete, umlaufende Schraubenfeder einvulkanisiert wird.

Bei der Montage wird der Reifen mit den gespreizten Wülsten in die Felge gekrempelt, wobei die Nase um den benachbarten Drahtkern geschwenkt wird. Nachdem die Nase die vertikale Stellung überwunden hat, erzeugt die Schraubenfeder das beschriebenen Drehmoment mit einer zur Vertiefung der Felge gerichteten Kraft.

Der Vorteil einer besonders guten Führung des Reifens auf der Felge im Notfall wird dadurch erreicht, daß der Reifen in der Mitte auf der radial inneren Seite einen umlaufenden Führungssteg aufweist und daß die Felge mit einer entsprechenden Nut versehen ist, in der der Steg abrollen kann.

Weitere vorteilhafte Ausgestaltungen der Erfindung sind den Unteransprüchen zu entnehmen.

Nachfolgend werden zwei Ausführungsbeispiele der Erfindung beschrieben und in einer Zeichnung dargestellt.

Es zeigt

Figur 1 ein Fahrzeugrad bei Normalbetrieb in einem radialen Teilschnitt,

Figur 2 das Fahrzeugrad gemäß Fig. 1 beim Notlauf in einem Schnitt durch die Aufstandsfläche und die gegenüberliegende Seite,

Figur 3 einen Reifen in der Vulkanisierstellung und in der gekrempelten, montierten Stellung in einem radialen Teilschnitt,

Figur 4 ein Fahrzeugrad bei Normalbetrieb mit einem Gewebestreifen als Federelement in einem radialen Teilschnitt,

Figur 5 das Fahrzeugrad gemäß Fig. 4 beim Notlauf,

Figur 6 ein Fahrzeugrad mit einer Mittenführung für den Notlauf in einem radialen Ausschnitt.

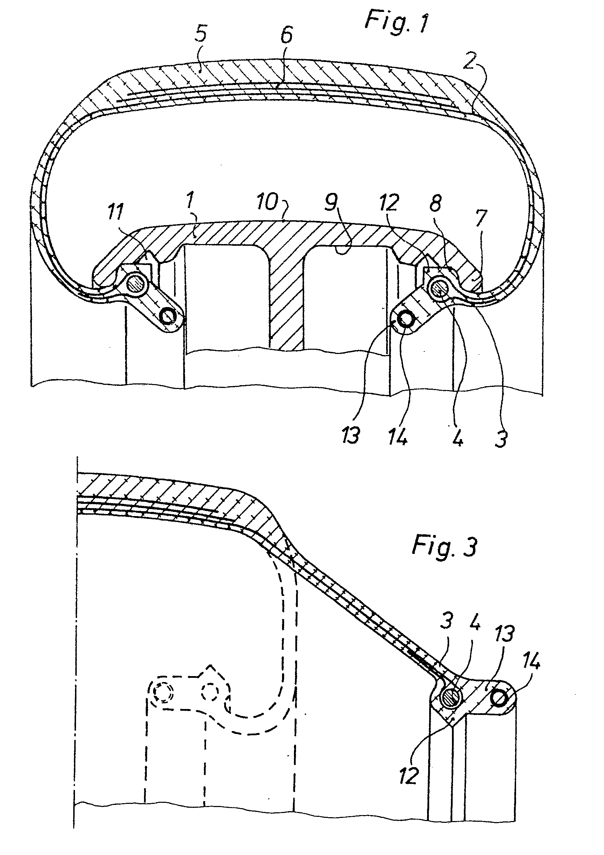

Das Fahrzeugrad gemäß Fig. 1 besteht aus einer einteiligen Felge 1 aus Metall oder einem Werkstoff ähnlicher Festigkeit und aus einem Gürtelreifen, der im wesentlichen aus Gummi oder gummiähnlichen Stoffen aufgebaut ist und eine Radialkarkasse 2 aufweist, die in den Wülsten 3 durch Umschlingen der zugfesten Wulstkerne 4 verankert ist. Unterhalb des Laufstreifens 5 zwischen diesem und der Karkasse 2 befindet sich ein in Umfangsrichtung zugfester, aus zwei oder mehreren Cordgewebelagen bestehender Gürtel 6, der die Seitenstabilisierung des Reifenkörpers bewirkt.

Der Felgenkranz der Felge 1 dient zur Halterung der Reifenwülste 3 und zur Abstützung des Reifens im Notfall. Seitlich außen wird der Felgenkranz durch je ein im wesentlichen sich radial nach innen erstreckendes Felgenhorn 7 begrenzt. Neben dem Felgenhorn 7 liegt am inneren Umfang je eine Sitzfläche 8 für einen Reifenwulst 3 und axial innen eine Vertiefung 9, deren Grund sich auf einem gegenüber dem mittleren Sitzflächendurchmesser größeren Durchmesser befindet. Die radial äußere Fläche des Felgenkranzes dient als Stützfläche 10 für den Reifen im Notlaufbetrieb.

Als Mittel, die einen Notlaufbetrieb gewährleisten, sind beim Fahrzeugrad nach Fig. 1, die das Rad im Normalbetrieb darstellt, eine Nut 11 im Felgenkranz neben jeder Sitzfläche 8 und am Reifenwulst ein in der Nähe dieser Nut 11 befindlicher Vorsprung 12 und eine Nase 13 zu nennen, die im montierten Zustand des Reifens ein Drehmoment erzeugt. Zur Erhöhung des Drehmoments kann die Nase 13 ein zusätzliches Federelement enthalten. Als zusätzliches Federelement kann eine umlaufende Schraubenfeder 14 dienen, die in der Nase 13 aus Gummi äquidistant zum Wulstkern 4 verläuft. Die Nase 13 kann zusätzlich als Hilfe bei Montage und Demontage des Reifens dienen.

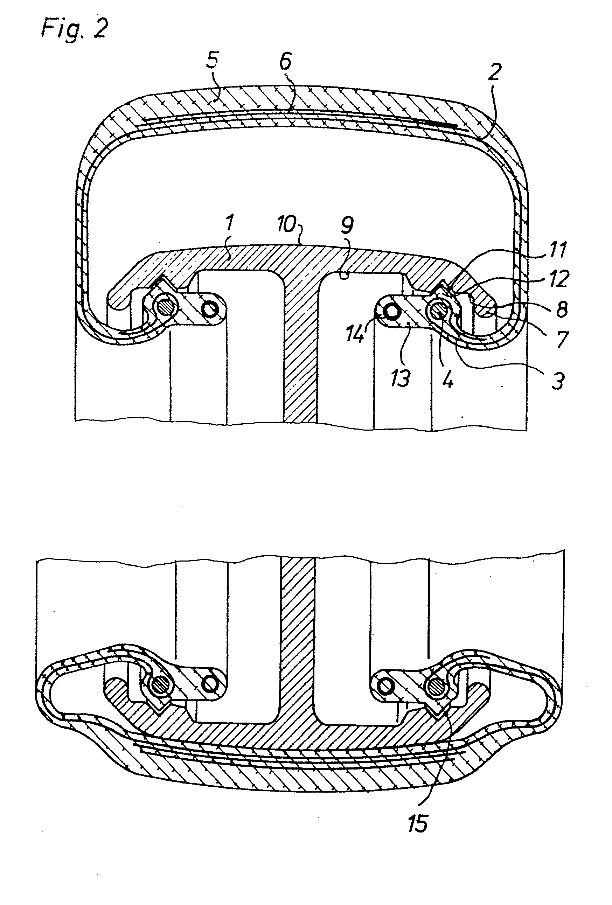

In Fig. 2 ist das Fahrzeugrad gemäß Fig. 1 im Notlaufbetrieb dargestellt. Bei einem plötzlichen Druckverlust wird der Reifen mit Unterstützung des Drehmoments der Nase 13 von den Sitzflächen 8 nach innen gedrückt, und die Vorsprünge 12 legen sich in die Nuten 11, so daß eine Rückkehr der Reifenwülste 3 auf die Sitzflächen 8 verhindert wird. Dabei dient eine Wand 15 der Nuten 11 als Felgenvorsprung hinter dem sich jeder Vorsprung 12 des Reifenwulstes 3 verhakt. Der Reifen stützt sich auf der radial äußeren Stützfläche 10 des Felgenkranzes ab, während die empfindlichen Seitenwandteile ausbuchten können. Durch die zuverlässige Lösung der Reifenwülste 3 von den Sitzflächen 8 des Felgenkranzes kann die Felge 1 ungehindert im Reifen abrollen, so daß es trotz der unterschiedlichen Umfangslängen von Felgenkranz und Reifen zu keinen inneren Verspannungen im Reifen kommt, die eine Zerstörung zur Folge haben könnten.

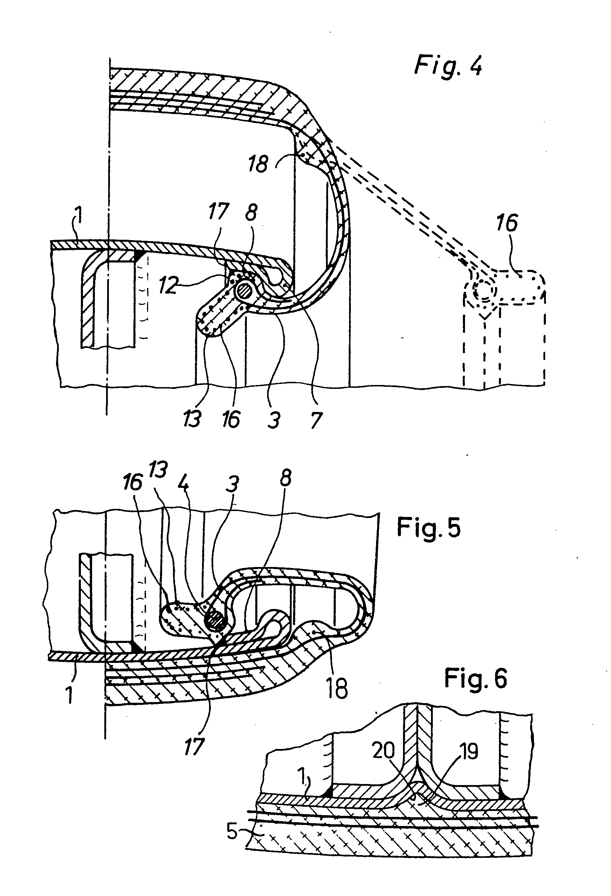

Die Darstellung des Reifens gemäß Fig. 3 dient dazu, die Erzeugung eines Drehmoments in der Nase 13 eines jeden Reifenwulstes 3 zu verdeutlichen. Der Reifen wird mit seitlich nach außen gespreizten Seitenwänden und Wülsten 3 in einer Lage vulkanisiert, bei der die Nasen 13 mit den darin enthaltenen Schraubenfedern 14 im wesentlichen axial nach außen gerichtet sind. Für eine Montage wird der Reifen in die gestrichelt gezeichnete Stellung gekrempelt. Dabei ist zunächst eine Kraft bis zu der Stellung aufzuwenden, in der die Schraubenfeder 14 sich vertikal unter dem Wulstkern 4 befindet. Danach wird diese Kraft frei und erzeugt an der Nase 3 ein Drehmoment, das die Nase zum Felgenkranz schwenken möchte. Es kann günstig sein, die Wulstkerne 4 nicht festhaftend in dem sie umgebenden Material einzubetten, so daß eine Schwenkung der Nasen erleichtert wird. Dies kann z. B. durch eine Kernumwicklung aus Gewebe und/oder durch eine Trennlösung erreicht werden.

Das in Fig. 4 dargestellte Fahrzeugrad unterscheidet sich vom dem nach Fig. 1 vor allem durch eine andere Ausbildung des Federelements in der Nase 13 und durch eine andere Gestaltung des Felgenkranzes.

Als Federelement dient ein in der Nase 13 im Querschnitt etwa U-förmig verlaufender Gewebestreifen 16 aus Stahldrähten bzw. -kabeln. Dabei schließen die Stahldrähte in den U-Schenkeln des Gewebestreifens 16 im nichtmontierten Zustand des Reifens, d. h. in seiner Vulkanisierstellung mit der Umfangsrichtung einen Winkel von etwa 45° ein. Gegebenenfalls kann auch ein Gewebestreifen aus natürlichen oder künstlichen textilen Festigkeitsträgern verwendet werden.

Der Felgenkranz ist an seinen axial äußeren Enden umgebördelt, wobei die umgebördelten Enden die Felgenhörner 7, die Sitzflächen 8 für die Reifenwülste 3 und zusätzlich Felgenvorsprünge 17 bilden, hinter denen sich die Vorsprünge 12 am Reifenwulst 3 in einem Notfall verhaken können, wie in Fig. 5 dargestellt.

Der Reifen gemäß Fig. 4 und 5 weist auf der Innenseite der Reifenwände je eine Wandverdickung 18 auf, die einen zusätzlichen Schutz bietet und als zusätzliche Seitenführung für den Reifen dienen kann. Eine solche könnte auch beim Rad nach Fig. 1 vorgesehen sein.

In Fig. 6 ist eine Mittenführung für ein Fahrzeugrad in einem radialen Ausschnitt dargestellt, die für ein noch gleichmäßigeres Abrollen einer Felge 1 im Reifen bei einem Notlaufbetrieb sorgt. Der Reifen weist in der Mitte auf der radial inneren Seite einen umlaufenden Führungssteg 19 auf, der im Notfall in einer Felgennut 20 abrollt, die sich radial außen in der Mitte des Felgenkranzes befindet.

**Patentansprüche**

1. Luftbereiftes Fahrzeugrad mit einer starren einteiligen Felge (1) und einem Gürtelreifen mit zugfesten Kernen (4) in den Wülsten, bei dem die Felge sich im wesentlichen radial nach innen erstreckende Felgenhörner (7) und neben diesen am inneren Umfang Sitzflächen (8) für die Reifenwülste (3) aufweist, bei dem weiterhin am inneren Umfang der Felge zur Mittelebene des Felgenkörpers hin Vertiefungen (9) angeordnet sind, deren Grund sich auf einem gegenüber dem mittleren Sitzflächendurchmesser größeren Durchmesser befindet, und bei dem am äußeren Umfang des Felgenkranzes umlaufende Stützflächen (10) für den Reifen vorhanden sind, dadurch gekennzeichnet, daß entweder an der Felge (1) und an den Reifenwülsten (3) oder nur an den Reifenwülsten Mittel vorhanden sind, die bei einem Luftdruckverlust aufgrund eines Defektes zumindest im Bereich der Aufstandsfläche des Reifens ein Abspringen der Reifenwülste (3) von den Felgensitzflächen (8) in Richtung auf die Mittelebene des Felgenkörpers bewirken und die eine auch nur zeitweilige Rückkehr der Reifenwülste (3) auf die Sitzflächen (8) während der Fahrt verhindern, so daß die Felge (1) bei einem Notlauf in dem Reifen abrollt.

2. Fahrzeugrad nach Anspruch 1, dadurch gekennzeichnet, daß die Reifenwülste (3) Vorsprünge (12) aufweisen, die sich nach einem Abspringen der Reifenwülste (3) von den Sitzflächen (8) hinter einem Felgenvorsprung (15, 17) verhaken und damit eine Rückkehr auf die Sitzflächen (8) verhindern.

3. Fahrzeugrad nach den Ansprüchen 1 und/oder 2, dadurch gekennzeichnet, daß jeder Reifenwulst (3) mittels einer angeformten Nase (13), die ein Federelement (14, 16) enthalten kann und die sich im montierten Zustand vom benachbarten Wulstkern (4) axial und radial nach innen erstreckt, ein Drehmoment erfährt, das an der Nase (13) eine zur Vertiefung (9) der Felge (1) gerichtete Kraft hervorruft.

4. Fahrzeugrad nach Anspruch 3, dadurch gekennzeichnet, daß zur Erzeugung des Drehmoments der Reifen in gespreiztem Zustand mit im wesentlichen axial nach außen gerichteten Nasen (13) vulkanisiert worden ist.

5. Fahrzeugrad nach Anspruch 4, dadurch gekennzeichnet, daß die Nasen (13) um die Wulstkerne (4) schwenkbar sind.

6. Fahrzeugrad nach den Ansprüchen 3 und 4, dadurch gekennzeichnet, daß jede Nase (13) als Federelement eine zum Wulstkern (4) äquidistant umlaufende Schraubenfeder (14) enthält.

7. Fahrzeugrad nach den Ansprüchen 3 und 4, dadurch gekennzeichnet, daß jede Nase (13) als Federelement einen im Querschnitt etwa U-förmig verlaufenden Gewebestreifen (16) aus Textilfäden oder Stahldrähten enthält.

8. Fahrzeugrad nach den Ansprüchen 4 und 7, dadurch gekennzeichnet, daß die Stahldrähte in den U-Schenkeln des Gewebestreifens (16) im nichtmontierten Zustand des Reifens, d. h. in der Vulkanisierstellung mit der Umfangsrichtung einen Winkel von etwa 45° einschließen.

9. Fahrzeugrad nach Anspruch 1, dadurch gekennzeichnet, daß der Reifen in der Mitte auf der radial inneren Seite einen umlaufenden Führungssteg (19) aufweist und daß die Felge (1) radial außen in der Mitte mit einer Felgennut (20) versehen ist, in der der Steg (19) im Notfall abrollt.

10. Fahrzeugrad nach Anspruch 1, dadurch gekennzeichnet, daß der Reifen auf der Innenseite der Seitenwände Wandverdickungen (18) aufweist.

## Claims

1. Vehicle wheel fitted with a pneumatic tyre, having a rigid, one-piece rim (1) and a belted tyre having substantially inextensible cores (4) in the beads, wherein the rim has rim flanges (7), which extend substantially radially inwardly, and has seating surfaces (8) for the tyre beads (3) adjacent said rim flanges on its inner circumference, wherein also recessed portions (9) are disposed on the inner circumference of the rim directed towards the central plane of the rim body, the base of said recesses being disposed on a diameter which is greater than the mean diameter of the seating surfaces, and wherein supporting surfaces (10) are provided for the tyre and extend over the outer circumference of the wheel rim, characterised in that means are provided either on the rim (1) and on the tyre beads (3) or only on the tyre beads, which means cause the tyre beads (3) to spring from the rim seating surfaces (8) in the direction of the central plane of the rim body in the event of there being a loss of pneumatic pressure due to a defect in at least the region of the supporting surface of the tyre, and which means prevent the tyre beads (3) from returning, even only temporarily, to the seating surfaces (8) during travel, so that the rim (1) travels in the tyre during emergency running.

2. Vehicle wheel according to claim 1, characterised in that the tyre beads (3) have projections (12) which hook behind a rim projection (15, 17) after the tyre beads (3) have sprung from the seating surfaces (8) and consequently prevent them from returning to the seating surfaces (8).

3. Vehicle wheel according to claims 1 and/or 2, characterised in that each tyre bead (3) is subject to a torque by means of an integrally moulded lug (13) which may contain a resilient member (14, 16) and extends axially and radially inwardly from the adjacent bead core (4) in the assembled state, said torque producing, at the lug (13), a force which is orientated towards the recessed portion (9) of the rim (1).

4. Vehicle wheel according to claim 3, characterised in that, to produce the torque, the tyre has been vulcanised in its expanded state with lugs (13) which are orientated substantially axially outwardly.

5. Vehicle wheel according to claim 4, characterised in that the lugs (13) are pivotable about the bead cores (4).

6. Vehicle wheel according to claims 3 and 4, characterised in that each lug (13) contains as a resilient member, a coil spring (14) which rotates equidistantly from the bead core (4).

7. Vehicle wheel according to claims 3 and 4, characterised in that each lug (13) contains as a resilient member a fabric strip (16) which is formed from textile filaments or steel wires and has a substantially U-shaped cross-section.

8. Vehicle wheel according to claims 4 and 7, characterised in that, when the tyre is in its non-assembled state, i. e. in its vulcanisation position, the steel wires in the U-shaped legs of the fabric strip (16) subtend an angle of approximately 45° with the circumferential direction.

9. Vehicle wheel according to claim 1, characterised in that the tyre has an encircling guide web (19) in the centre of its radially inner side, and in that the rim (1) is radially and outwardly provided in its centre with a rim groove (20) in which the web (19) travels in an emergency.

10. Vehicle wheel according to claim 1, characterised in that the tyre has thickened wall portions (18) on the inner surface of the lateral walls.

**Revendications**

1. Roue d'un véhicule garnie d'un pneumatique et comportant une jante monobloc rigide (1) et un pneumatique à carcasse radiale portant des tringles (4) résistant à la traction, qui sont situées dans les talons, et dans laquelle la jante comporte des rebords (7) et des surfaces d'appui (8) situées sur le pourtour intérieur, à côté de ces rebords, et prévues pour les talons (3) du pneumatique, et dans laquelle en outre sur le pourtour intérieur de la jante se trouvent disposés, en direction du plan médian du corps de la jante, des renfoncements (9) dont le fond est situé sur un diamètre supérieur au diamètre moyen de la surface d'appui, et dans laquelle des surfaces périphériques de support (10) sont prévues pour le pneumatique sur le pourtour extérieur de la couronne de la jante, caractérisée en ce qu'il est prévu soit sur la jante (1) et sur les talons (3) du pneumatique, soit uniquement sur ces derniers, des moyens qui dans le cas d'une chute de la pression d'air due à un défaut provoquent, au moins dans la zone de la surface de roulement du pneumatique, un écartement brusque du talon (3) du pneumatique par rapport à la surface d'appui (8) de la jante, en direction du plan médian du corps de la jante, et qui empêchent un retour, même seulement temporaire, des talons (3) du pneumatique sur la surface d'appui (8) pendant le déplacement, de sorte que la jante (1) roule dans le pneumatique dans le cas d'un fonctionnement exceptionnel d'urgence.

2. Roue de véhicule selon la revendication 1, caractérisée en ce que les talons (3) du pneumatique comportent des parties saillantes (12) qui, après un écartement des talons (3) par rapport aux surfaces d'appui (8), s'accrochent derrière une partie saillante (15, 16) de la jante et empêchent de ce fait un retour sur les surfaces d'appui (8).

3. Roue de véhicule selon la revendication 1 et/ou 2, caractérisée en ce que chaque talon (3) du pneumatique est soumis, au moyen d'une corne (13), réalisée par façonnage, qui peut contenir un organe élastique (14, 16) et qui s'étend axialement et radialement vers l'intérieur lorsque la tringle voisine (4) du talon est montée, à un couple qui provoque l'application d'une force, dirigée vers le renfoncement (9) de la jante (1), au niveau de ladite corne (13).

4. Roue de véhicule selon la revendication 3, caractérisée en ce que pour l'obtention du couple, le pneumatique a été vulcanisé, à l'état étalé, avec ses cornes dirigées essentiellement axialement vers l'extérieur.

5. Roue de véhicule, selon la revendication 4, caractérisée en ce que les cornes (13) peuvent pivoter autour des tringles (4) des talons.

6. Roue de véhicule selon la revendication 3 et 4 caractérisée en ce que chaque corne (13) contient, comme organe élastique, un ressort hélicoïdal périphérique (14) qui est à une distance constante de la tringle (4) du talon.

7. Roue de véhicule selon la revendication 3 et 4, caractérisée en ce que chaque corne (13) contient, comme organe élastique, une bande tissée (16) présentant une section transversale approximativement en forme de U, et constituée par des fils textiles ou par des fils d'acier.

8. Roue de véhicule selon les revendications 4 et 7, caractérisée en ce que lorsque le pneumatique n'est pas à l'état monté, c'est-à-dire lorsqu'il se trouve dans la position de vulcanisation, les fils d'acier situés dans les branches du U de la bande de tissu (16) font un angle d'environ 45° avec la direction circonférentielle.

9. Roue de véhicule selon la revendication 1, caractérisée en ce que le pneumatique comporte dans sa partie médiane, sur sa face latérale intérieure, une nervure périphérique de guidage (19) et que la jante (1) comporte en son centre, dans une position extérieure du point de vue radial, une rainure de jante (20) dans laquelle la nervure (19) roule dans le cas d'un fonctionnement exceptionnel d'urgence.

10. Roue de véhicule selon la revendication 1, caractérisée en ce que le pneumatique comporte des épaississements (18) sur la face intérieure des parois latérales.

Fig. 1

Fig. 3

Fig. 2

Fig. 4

Fig. 5

Fig. 6